(19) Europäisches Patentamt
European Patent Office
Office européen des brevets

(11) Veröffentlichungsnummer: **0 456 030 A2**

# (12) EUROPÄISCHE PATENTANMELDUNG

(21) Anmeldenummer: **91106486.3**

(22) Anmeldetag: **23.04.91**

(51) Int. Cl.5: **C08L 69/00**, C08L 55/02

(30) Priorität: **05.05.90 DE 4014419**

(43) Veröffentlichungstag der Anmeldung:
**13.11.91 Patentblatt 91/46**

(84) Benannte Vertragsstaaten:
**DE FR GB IT**

(71) Anmelder: **BAYER AG**

**W-5090 Leverkusen 1 Bayerwerk(DE)**

(72) Erfinder: **Wittmann, Dieter, Dr.**
**Wolfskaul 4**
**W-5000 Köln 80(DE)**
Erfinder: **Eckel, Thomas, Dr.**
**Gneisenaustrasse 15a**
**W-4047 Dormagen 1(DE)**
Erfinder: **Ott, Karl-Heinz, Dr.**
**Paul-Klee-Strasse 54**
**W-5090 Leverkusen 1(DE)**
Erfinder: **Kress, Hans-Jürgen, Dr.**
**Scheiblerstrasse 111**
**W-4150 Krefeld 1(DE)**
Erfinder: **Schoeps, Jochen, Dr.**
**Windmühlenstrasse 126**
**W-4150 Krefeld(DE)**

## (54) Polycarbonat-ABS-Formmassen.

(57) Gegenstand der vorliegenden Erfindung sind Mischungen aus Polycarbonaten und Masse-Pfropfpolymerisaten, die einen zusätzlichen Gehalt an Pfropfpolymerisaten enthalten, welche durch Emulsions-Pfropfpolymerisation hergestellt sind, die u.a. dadurch gekennzeichnet sind, daß der über das Emulsions-Pfropfpolymerisat eingebrachte Kautschukgehalt weniger als 50 Gew.-% des Gesamtkautschukgehalts der Formmassen ausmacht.

EP 0 456 030 A2

Thermoplastische Formmassen aus Polycarbonaten und ABS-Polymerisaten sind seit langem bekannt. So beschreibt beispielsweise DE 1 170 141 die gute Verarbeitbarkeit von Formmassen aus Polycarbonaten und Pfropfpolymerisaten von Monomermischungen aus Acrylnitril und einem aromatischen Vinylkohlenwasserstoff auf Polybutadien (Emulsions-ABS).

Mischungen aus Polycarbonaten und ABS-Polymerisaten, wobei letztere nach dem Masse-Suspensions-Verfahren hergestellt wurden, sind nach US 3 852 393 zur Herstellung flammwidriger Formmassen geeignet.

Gemäß US 4 624 986 weisen Formmassen aus ABS-Polymerisaten, die nach dem Masse- oder Masse-Suspensions-Verfahren hergestellt wurden, und Polycarbonaten verbesserte Tieftemperatureigenschaften und verminderten Glanz auf.

Laut EP 0 312 929 lassen sich die Vorteile von Formmassen aus Polycarbonat und Emulsions-ABS (z.B. gute Zähigkeit und hoher Glanz) sowie von Mischungen aus Polycarbonat und Masse-ABS (z.B. gutes Fließverhalten) dann vereinigen, wenn als ABS-Komponente eine Mischung aus Emulsions-ABS und nach anderen Verfahren (Masse-, Lösungspolymerisation) hergestelltem ABS verwendet wird.

Die Lehre der EP 0 312 929 besagt weiterhin, daß zum Erzielen der erfindungsgemäßen Eigenschaftsverbesserungen das aus dem Emulsionsprozeß stammende Pfropfmischpolymerisat (vorzugsweise ABS) mehr als 55 Gew.-% der Pfropfgrundlage (= des Gesamtelastomergehalts) enthalten muß (S. 4, Z. 25 bis 29 der EP). Da nun andererseits im Stand der Technik bekannt ist, daß die Verwendung von Emulsions-ABS in Polycarbonat zu vermindertem Fließverhalten (EP 0 312 929, S. 3, Z. 43) sowie geringerer thermischer Belastbarkeit führt (Verfärbung, siehe z.B. EP 0 107 015, S. 3, Z. 20 bis 24), war es das Ziel dieser Arbeiten, Formmassen mit einem möglichst geringen Anteil an Emulsions-Pfropfpolymerisat bereitzustellen, die aber dennoch die Vorteile - gute Tieftemperaturzähigkeit, gutes Fließverhalten und hohe Thermostabilität - in optimaler Weise in sich vereinigen.

Überraschenderweise fanden wir nun, daß Mischungen aus Polycarbonaten, Masse-Pfropfpolymerisaten und Emulsions-Pfropfpolymerisaten gutes Fließverhalten, gute Tieftemperaturzähigkeit und hohe Thermostabilität besitzen, auch wenn in den Formmassen der Anteil an der Pfropfgrundlage (bzw. am Gesamtelastomergehalt), den das Emulsions-Pfropfpolymerisat beiträgt, weniger als 50 Gew.-%, mindestens jedoch 10 Gew.-% ausmacht.

Gegenstand der vorliegenden Erfindung sind demzufolge Formmassen, enthaltend:

A. 10 bis 95, vorzugsweise 20 bis 90, besonders bevorzugt 30 bis 80 Gew.-Teile eines oder mehrerer aromatischer Polycarbonate, und

B. 5 bis 90, vorzugsweise 10 bis 80, insbesondere 20 bis 70 Gew.-Teile eines oder mehrerer Pfropfpolymerisate, die erhalten werden durch Pfropfpolymerisation von

B.1 50 bis 99, vorzugsweise 65 bis 98, insbesondere 75 bis 97 Gew.-Teilen einer Mischung aus

B.1.1 50 bis 99, vorzugsweise 60 bis 95 Gew.-Teilen Styrol, α-Methylstyrol, kernsubstituierten Styrolen, $C_1$-$C_8$-Alkyl-methacrylaten, oder Mischungen daraus, und

B.1.2 1 bis 50, vorzugsweise 5 bis 40 Gew.-Teilen Acrylnitril, Methacrylnitril, $C_1$-$C_8$-Alkylmethacrylaten,$C_1$-$C_8$-Alkylacrylaten, Maleinsäureanhydrid, N-Alkyl- oder N-Aryl-substituierten Maleinimiden oder Mischungen daraus,

in Gegenwart von

B.2 1 bis 50, vorzugsweise 2 bis 35, insbesondere 3 bis 25 Gew.-Teilen, eines mit B.1.1 und B.1.2 copolymerisierbaren Kautschuks mit einer Glasübergangstemperatur <10°C, vorzugsweise < -10°C,

wobei das Pfropfpolymerisat B nach einem Masse- oder Lösungs- oder Masse-Suspensions-Polymerisationsverfahren hergestellt ist, und

C. 0,1 bis 50, vorzugsweise 0,5 bis 30, besonders bevorzugt 1 bis 15 Gew.-Teile eines Pfropfpolymerisats von

C.1 5 bis 60, vorzugsweise 10 bis 50, Gew-Teile einer Pfropfauflage aus Vinylmonomerpolymerisat, wobei die Pfropfauflage erhalten wurde durch Emulsions-Pfropfpolymerisation einer Monomermischung aus

C.1.1 50 bis 99, vorzugsweise 60 bis 95 Gew.-Teilen Styrol, α-Methylstyrol, kernsubstituierten Styrolen, Methylmethacrylat oder Mischungen daraus, und

C.1.2 1 bis 50, vorzugsweise 5 bis 40 Gew.-Teilen (Meth)acrylnitril, Methylmethacrylat, n-Butylacrylat, t-Butyl(meth)acrylat, Maleinsäureanhydrid, N-Alkyl- oder N-Aryl-substituierten Maleinimiden oder Mischungen daraus,

auf

C.2 40 bis 95, vorzugsweise 50 bis 90, Gew.-Teile einer vernetzten, teilchenförmigen elastomeren Pfropfgrundlage mit einem durchschnittlichen Teilchendurchmesser ($d_{50}$-Wert) von 0,05 bis 2

µm, vorzugsweise 0,1 bis 0,6 µm und einer Glasübergangstemperatur <10 °C, vorzugsweise < -10 °C,

wobei die Summe der Gew.-Teile aus A + B jeweils 100 Gew.-Teile beträgt, und wobei sich die Gew.-Teile C auf 100 Gew.-Teile A + B beziehen, dadurch gekennzeichnet, daß der aus der Komponente C eingebrachte Anteil C.2 an der gesamten Elastomerkomponente (Summe aus B.2 und C.2) weniger als 50 Gew.-%, mindestens jedoch 10 Gew.-% ausmacht, und daß der Gesamtelastomergehalt (Summe der Gew.-Teile aus B.2 und C.2) der Formmassen aus A bis C weniger als 20, vorzugsweise weniger als 15, besonders bevorzugt weniger als 10 Gew.-Teile beträgt, bezogen auf 100 Gew.-Teile der Summe aus A bis C.

Die Formmassen können darüber hinaus weitere, mit A, B oder C mindestens teilverträgliche Polymere, insbesondere harzartige, kautschukfreie Polymerisate von Komponenten B.1.1 und B.1.2 und/oder aromatische Polyestercarbonate und/oder Polyalkylenterephthalate in Mengen von bis zu 50 Gew.-Teilen, bezogen auf 100 Gew.-Teile aus A bis C, enthalten.

Komponente A

Aromatische Polycarbonate gemäß Komponente A sind literaturbekannt oder nach literaturbekannten Verfahren herstellbar (siehe dazu beispielsweise Schnell, "Chemistry and Physics of Polycarbonates", Interscience Publishers, 1964, DE-AS 1 495 626, DE-OS 2 232 877, DE-OS 2 703 376, DE-OS 3 000 610, DE-OS 2 174 544, DE-OS 2 940 024 und DE-OS 3 007 934). Besonders bevorzugt ist das Phasengrenzflächenverfahren. Unter aromatischen Polycarbonaten A im Sinne dieser Erfindung werden Homopolycarbonate, Copolycarbonate und Mischungen dieser Polycarbonate verstanden, denen z.B. mindestens eines der folgenden Diphenole zugrunde liegt:
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone,
α,α'-Bis-(hydroxyphenyl)-diisopropylbenzole
sowie deren kernalkylierte und kernhalogenierte Derivate. Diese und weitere geeignete Diphenole sind z.B. in den US-PS 3 028 365, 3 275 601, 3 148 172, 3 062 781, 2 991 273, 3 271 367, 2 999 835, 2 970 131 und 2 999 846, in den DE-OS 1 570 703, 2 063 050, 2 063 052, 2 211 956, 2 211 957, der FR-PS 1 561 518 und in der Monographie von H. Schnell, "Chemistry and Physics of Polycarbonates", Interscience Publishers, New York, 1964, beschrieben.

Bevorzugte Diphenole sind z.B.
4,4'-Dihydroxydiphenyl,
2,4-Bis-(4-hydroxyphenyl)-2-methylbutan,
α,α'-Bis-(4-hydroxyphenyl)-p-diisopropylbenzol,
2,2-Bis-(3-methyl-4-hydroxyphenyl)-propan und
2,2-Bis-(3-chlor-4-hydroxyphenyl)-propan.

Besonders bevorzugte Diphenole sind z.B.:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)propan und
1,1-Bis-(4-hydroxyphenyl)-cyclohexan,

Im allgemeinen entsprechen die für die Herstellung der aromatischen Polycarbonate A bevorzugten Diphenole der Formel

HO - Z - OH (I),

worin Z einen zweiwertigen ein- oder mehrkernigen aromatischen $C_6$-$C_{30}$-Rest bedeutet, wobei die beiden

OH-Gruppen direkt an je ein C-Atom eines aromatischen Systems gebunden sind.

Besonders bevorzugte Diphenole entsprechen der Formel

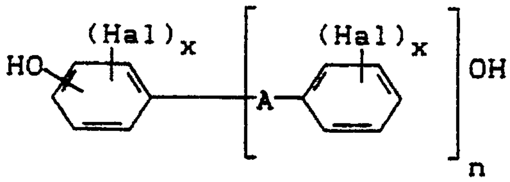

(II)

worin

A eine Einfachbindung, $C_1$-$C_5$-Alkylen, $C_2$-$C_5$-Alkyliden, $C_5$-$C_6$-Cycloalkylen oder -alkyliden, -O-, -S-,

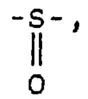

-$SO_2$- oder

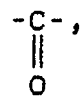

Hal Chlor oder Brom,

x Null, 1 oder 2 und

n Null oder 1 bedeuten.

Die aromatischen Polycarbonate A umfassen auch Blockcopolycarbonate, die 1 bis 20, vorzugsweise 1,5 bis 15, insbesondere 2 bis 10, Gew.-%, bezogen auf Diphenolreste des Copolycarbonats A, einkondensierte Reste von Diphenolen der Formel

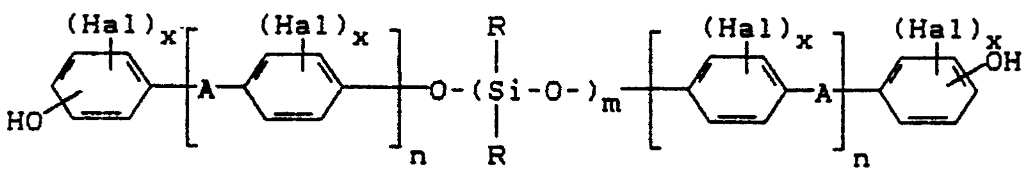

(III)

enthalten,

worin

A, Hal, x und n die oben angegebene Bedeutung haben,

m eine ganze Zahl von 5 bis 100, vorzugsweise von 20 bis 80, und

R $C_1$-$C_{20}$-Alkyl, vorzugsweise Methyl, Ethyl, Propyl, n-Butyl, tert.-Butyl, und $C_6$-$C_{20}$-Aryl, vorzugsweise Phenyl, bedeuten mit der Maßgabe, daß die Substituenten R nicht nur in der obigen Formel (III), sondern an jedem Siliciumatom des Blockcopolycarbonats unabhängig voneinander eine der Bedeutungen innerhalb der Definition für R annehmen können.

Wenn als aromatische Polycarbonate A Mischungen mit wenigstens einem Blockcopolycarbonat auf Basis eines Diphenols der Formel (III) eingesetzt werden, soll der Anteil einkondensierter Diphenolreste (III) vorzugsweise 1 bis 20 Gew.-%, bezogen auf die Gesamtmenge sämtlicher Diphenolreste der verwendeten

aromatischen Polycarbonate A, betragen.

Die Herstellung von Blockcopolycarbonaten auf Basis von Diphenolen der Formel (III) wird beispielsweise in der DE-OS 33 34 872 und in der US-PS 3 821 325 beschrieben.

Die aromatischen Polycarbonate A können durch den Einsatz geringer Mengen, vorzugsweise von 0,05 bis 2,0 Mol-% (bezogen auf eingesetzte Diphenole), drei- oder mehr als dreifunktioneller Verbindungen, beispielsweise solcher mit drei oder mehr als drei phenolischen Hydroxylgruppen, verzweigt sein.

Die aromatischen Polycarbonate A besitzen in der Regel mittlere Molekulargewichte $M_w$ von 10 000 bis 200 000, vorzugsweise von 20 000 bis 80 000, ermittelt durch Lichtstreuung.

Zur Einstellung des Molekulargewichts $M_w$ der Polycarbonate A können in bekannter Weise Kettenabbrecher, wie beispielsweise Phenole, Halogenphenole oder Alkylphenole, in den berechneten Mengen eingesetzt werden.

Besonders bevorzugte Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten gemäß DE-OS 3 506 472, wie 3,5-Di-tert.-butylphenol, p-iso-Octylphenol, p-tert.-Octylphenol, p-Dodecylphenol, 2-(3,5-Dimethylheptyl)-phenol und 4-(3,5-Dimethyl-heptyl)-phenol.

Die Menge an einzusetzenden Kettenabbrechern beträgt im allgemeinen zwischen 0,5 und 10 Mol-%, bezogen auf die Summe der jeweils eingesetzten Diphenole.

Besonders bevorzugte aromatische Polycarbonate A sind neben Bisphenol-A-Homopolycarbonat die Copolycarbonate aus Bisphenol-A mit bis zu 15 Mol-%, bezogen auf die Gesamtsumme Diphenole, an 2,2-Bis-(3,5-dibrom-4-hydroxyphenyl)-propan und die Copolycarbonate aus Diphenolen der Formel (II) mit 1 bis 20 Gew.-% Diphenolen der Formel (III), vorzugsweise mit A = 2.2-Propylen, bezogen auf die Summe der Diphenole (II) und (III).

Komponente B

Das kautschukmodifizierte Pfropfpolymerisat B umfaßt ein statistisches (Co)polymerisat aus Monomeren gemäß B.1.1 und B.1.2, sowie einen mit dem statistischen (Co)polymerisat aus B.1.1 und B.1.2 gepfropften Kautschuk B.2, wobei die Herstellung von B in bekannter Weise nach einem Masse- oder Lösungs- oder Masse-Suspensions-Polymerisationsverfahren erfolgt, wie z.B. in den US 3 243 481, US 3 509 237, US 3 660 535, 4 221 833 und US 4 239 863 beschrieben.

Beispiele für Monomere B.1.1 sind Styrol, α-Methylstyrol, p-Methylstyrol, p-Chlorstyrol, Methylmethacrylat, Beispiele für Monomere B.1.2 sind Acrylnitril, Methacrylnitril, Methylmethacrylat, n-Butylacrylat, t-Butylacrylat, Maleinsäureanhydrid und N-Phenylmaleinimid.

Bevorzugte Monomere B.1.1 sind Styrol, α-Methylstyrol und Methylmethacrylat, bevorzugte Monomere B.1.2 sind Acrylnitril, Maleinsäureanhydrid und Methylmethacrylat. Besonders bevorzugte Monomere sind B.1.1 Styrol und B.1.2 Acrylnitril.

Für die kautschukmodifizierten Pfropfpolymerisate B geeignete Kautschuke B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke.

Bevorzugte Kautschuke B.2 sind Dienkautschuke (z.B. auf Basis Butadien, Isopren etc.) oder Gemische von Dienkautschuken oder Copolymerisate von Dienkautschuken oder deren Gemischen mit weiterer copolymerisierbaren Monomeren (z.B. gemäß B.1.1 und B.1.2), mit der Maßgabe, daß die Glasübergangstemperatur der Komponente B.2 unterhalb 10 °C, vorzugsweise unterhalb -10 °C liegt. Besonders bevorzugt wird reiner Polybutadienkautschuk.

Die Komponente B kann, falls erforderlich und wenn dadurch die Kautschukeigenschaften der Komponente B.2 nicht beeinträchtigt werden, zusätzlich noch geringe Mengen, üblicherweise weniger als 5 Gew.-%, vorzugsweise weniger als 2 Gew.-%, bezogen auf B.2, vernetzend wirkender ethylenisch ungesättigter Monomeren enthalten. Beispiele für solche vernetzend wirkenden Monomere sind Alkylendiol-di-(meth)-acrylate, Polyester-di-(meth)-acrylate, Divinylbenzol, Trivinylbenzol, Triallylcyanurat, Allyl-(meth)-acrylat, Diallylmaleat und Diallylfumarat.

Das kautschukmodifizierte Pfropfpolymerisat B wird erhalten durch Pfropfpolymerisation von 50 bis 99, bevorzugt 65 bis 98, besonders bevorzugt 75 bis 97 Gew.-Teilen eines Gemischs aus 50 bis 99, bevorzugt 60 bis 95 Gew.-Teilen Monomeren gemäß B.1.1 und 1 bis 50, bevorzugt 5 bis 40 Gew.-Teilen Monomeren gemäß B.1.2 in Gegenwart von 1 bis 50, vorzugsweise 2 bis 35, besonders bevorzugt 3 bis 25 Gew.-Teilen der Kautschukkomponente B.2, wobei die Pfropfpolymerisation nach einem Masse- oder Lösungs- oder Masse-Suspensions-Polymerisationsverfahren durchgeführt wird.

Wesentlich bei der Herstellung der kautschukmodifizierten Pfropfpolymerisate B. ist, daß die Kautschukkomponente B.2 vor der Pfropfpolymerisation im Gemisch der Monomeren B.1.1 und B.1.2 in gelöster Form vorliegt. Die Kautschukkomponente B.2 darf also weder so stark vernetzt sein, daß eine Lösung in B.1.1 und B.1.2 unmöglich wird, noch darf B.2 zu Beginn der Pfropfpolymerisation bereits in Form diskreter Teilchen vorliegen. Die für die Produkteigenschaften von B. wichtige Teilchenmorphologie und zunehmende Vernetzung von B.2 bildet sich erst im Verlauf der Pfropfpolymerisation aus (siehe hierzu beispielsweise Ullmann, Encyclopädie der technischen Chemie, Band 19, S. 284 ff., 4. Auflage 1980).

Das statistische Copolymerisat aus B.1.1 und B.1.2 liegt üblicherweise im Polymerisat B zu einem Teil auf den Kautschuk B.2 auf oder eingepfropft vor, wobei dieses Pfropfmischpolymerisat diskrete Teilchen im Polymerisat B ausbildet. Der Anteil des auf- oder eingepfropften Copolymerisats aus B.1.1 und B.1.2 am gesamten Copolymerisat aus B.1.1 und B.1.2 - also die Pfropfausbeute (= Gewichtsverhältnis der tatsächlich gepfropften Pfropfmonomeren zu den insgesamt verwendeten Pfropfmonomeren x 100, angegeben in %) - sollte dabei 2 bis 40 %, vorzugsweise 3 bis 30 %, besonders bevorzugt 4 bis 20 % betragen.

Der mittlere Teilchendurchmesser der resultierenden gepfropften Kautschukteilchen (ermittelt durch Auszählung an elektronenmikroskopischen Aufnahmen) liegt im Bereich von 0,5 bis 5 µm, vorzugsweise von 0,8 bis 2,5 µm.

Komponente C

Die erfindungsgemäßen Komponenten C sind durch Emulsions-Polymerisation erhaltene Pfropfcopolymerisate von Monomeren C.1 auf kautschukelastische Grundlagen C.2.

Beispiele für Monomere C.1 sind C.1.1 Styrol, α-Methylstyrol, p-Methylstyrol, p-Chlorstyrol, Methylmethacrylat oder Mischungen daraus, Beispiele für Monomere C.1.2 sind Acrylnitril, Methacrylnitril, Methylmethacrylat, n-Butylacrylat, t-Butylacrylat, Maleinsäureanhydrid und N-Phenyl-maleinimid oder Mischungen daraus.

Bevorzugte Monomere C.1.1 sind Styrol, α-Methylstyrol und Methylmethacrylat, bevorzugte Monomere C.1.2 sind Acrylnitril, Maleinsäureanhydrid und Methylmethacrylat. Besonders bevorzugte Monomere sind C.1.1 Styrol und C.1.2 Acrylnitril.

Für die kautschukmodifizierten Pfropfpolymerisate C geeignete Kautschuke C.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke.

Der Anteil der Kautschukgrundlage C.2 am Pfropfpolymerisat C beträgt 40 bis 95 Gew.-%, vorzugsweise 50 bis 90 Gew.-%.

Bevorzugte Kautschuke C.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß C.1.1 und C.1.2), mit der Maßgabe, daß die Glasübergangstemperatur der Komponente C.2 unterhalb 10 °C, vorzugsweise unterhalb -10 °C liegt. Besonders bevorzugt wird reiner Polybutadienkautschuk.

Besonders bevorzugte Polymerisate C sind z.B. ABS-Polymerisate, wie sie z.B. in der DE-OS 2 035 390 (= US-PS 3 644 574) oder in der DE-OS 2 248 242 (= GB-PS 1 409 275) beschrieben sind.

Der Gelanteil der Pfropfgrundlage C.2 beträgt mindestens 60 Gew.-% (in Toluol gemessen), der mittlere Teilchendurchmesser $d_{50}$ des Pfropfpolymerisats C 0,05 bis 2 µm, vorzugsweise 0,1 bis 0,6 µm.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch Polymerisation der Pfropfmonomere in Gegenwart der Pfropfgrundlage gewonnen werden.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782 bis 796) bestimmt werden.

Geeignete Acrylatkautschuke C.2 der Polymerisate C sind vorzugsweise Polymerisate aus Acrylsäurealkylestern, gegebenenfalls mit bis zu 40 Gew.-%, bezogen auf C.2, anderen polymerisierbaren, ethylenisch ungesättigten Monomeren, Zu den bevorzugten polymerisierbaren Acrylsäureestern gehören $C_1$-$C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomere beträgt vorzugsweise 0,02 bis 5, insbesondere 0,05 bis 2 Gew.-%, bezogen auf die Pfropfgrundlage C.2.

Bei cyclischen vernetzenden Monomeren mit mindestens 3 ethylenisch ungesättigten Gruppen ist es vorteilhaft, die Menge auf unter 1 Gew.-% der Pfropfgrundlage C.2 zu beschränken.

Bevorzugte "andere" polymerisierbare, ethylenisch ungesättigte Monomere, die neben den Acrylsäureestern gegebenenfalls zur Herstellung der Pfropfgrundlage C.2 dienen können, sind z.B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage C.2 sind Emulsionspolymerisate, die einen Gelgehalt von mindestens 60 Gew.-% aufweisen.

Weitere geeignete Pfropfgrundlagen gemäß C.2 sind Silikonkautschuke mit pfropfaktiven Stellen, wie sie in den DE 37 04 657, DE 37 04 655, DE 36 31 540 und DE 36 31 539 beschrieben werden.

Der Gelgehalt der Pfropfgrundlage C.2 wird bei 25°C in einem geeigneten Lösungsmittel bestimmt (M. Hoffmann, H. Krömer, R. Kuhn, Polymeranalytik I und II, Georg Thieme Verlag, Stuttgart 1977).

Die erfindungsgemäßen Formmassen können Zusätze eines oder mehrerer, mit den Komponenten A und/oder B und/oder C mindestens teilweise verträglicher thermoplastischer Kunststoffe enthalten, und zwar in einer Menge bis zu 50 Gew.-Teilen, bezogen auf 100 Gew.-Teile der Summe aus A bis C.

Als Zusätze in Frage kommen hier insbesondere thermoplastische aromatische Polyestercarbonate, vorzugsweise solche auf Basis von aromatischen Dicarbonsäurehalogeniden (wie Terephthalsäuredichlorid und/oder Isophthalsäuredichlorid), Kohlensäurederivaten (wie z.B. Phosgen) und den unter Komponente A beschriebenen Diphenolen I.

Weiterhin geeignet sind Polyalkylenterephthalate wie z.B. Polyethylenterephthalat und Polybutylenterephthalat, aber auch thermoplastische Copolymerisate von Komponenten B.1.1 und B.1.2 mit mittleren Molekulargewichten $M_w$ von 15 000 bis 200 000, ermittelt durch Lichtstreuung oder Sedimentation. Die Copolymerisate werden durch radikalische Polymerisation, z.B. durch Emulsions-, Suspensions-, Lösungs- oder Massepolymerisation, vorzugsweise durch Lösungs- oder Massepolymerisation, hergestellt.

Die erfindungsgemäßen Formmassen können darüber hinaus weitere bekannte Zusätze wie Stabilisatoren, Pigmente, Entformungsmittel, Fließhilfsmittel, Flammschutzmittel, Antistatika, Füll- und Verstärkungsstoffe, in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200°C bis 350°C, in üblichen Vorrichtungen wie Innenknetern, Extrudern oder Doppelwellenschnecken schmelzcompoundiert oder schmelzextrudiert.

Gegenstand der vorliegenden Erfindung ist somit auch ein Verfahren zur Herstellung der erfindungsgemäßen Formmassen aus den Komponenten A, B und C, sowie gegebenenfalls mindestens einem weiteren Bestandteil ausgewählt aus aromatischen Polyestercarbonaten, Polyalkylenterephthalaten, Copolymerisaten der Komponenten B.1.1 und B.1.2, Stabilisatoren, Pigmenten, Entformungsmitteln, Fließhilfsmitteln, Flammschutzmitteln, Antistatika, Füll- und Verstärkungsstoffen, das dadurch gekennzeichnet ist, daß man die jeweiligen Komponenten und gegebenenfalls weiteren Bestandteile in bekannter Weise vermischt und bei erhöhten Temperaturen, vorzugsweise bei 200°C bis 350°C in üblichen Vorrichtungen, wie Innenknetern, Extrudern oder Doppelwellenschnecken schmelzcompoundiert oder schmelzextrudiert.

Die erfindungsgemäßen Formmassen können zur Herstellung von Formkörpern jeder Art, z.B. durch Spritzgießen, verwendet werden. Beispiele für Formkörper sind: Gehäuseteile (z.B. für Haushaltsgeräte wie Saftpressen, Kaffeemaschinen, Mixer), Abdeckplatten für das Baugewerbe und Automobilteile. Sie werden außerdem für elektrische Geräte, z.B. für Steckerleisten eingesetzt, weil sie sehr gute elektrische Eigenschaften haben.

Formkörper können auch durch Tiefziehen aus vorher hergestellten Platten oder Folien hergestellt werden.

Ein weiterer Gegenstand der Erfindung ist also die Verwendung der beschriebenen Formmassen zur Herstellung von Formkörpern.

1. Beispiele

Komponente A

Polycarbonat auf Basis Bisphenol A mit einer relativen Lösungsviskosität $\eta_{rel}$ von 1,26 bis 1,28, gemessen in Methylenchlorid bei 25 °C und einer Konzentration von 0,5 g/100 ml.

Komponente B

B.I

Masse-ABS-Polymerisat der Fa. Dow (Handelsname Magnum 541; Acrylnitril : Butadien : Styrol = 25,1 : 9,2 : 65,7; Bestimmung durch FTIR-Spektroskopie).

B.II

Masse-ABS-Polymerisat der Fa. Dow (Handelsname Magnum 3154; Acrylnitril : Butadien : Styrol = 18,0 : 6,5 : 75,5; Bestimmung durch FTIR-Spektroskopie).

Komponente C

C.I

Emulsions-Pfropfpolymerisat einer Monomermischung von 20 Gew.-Teilen Methylmethacrylat/n-Butylacrylat (im Gew.-Verhältnis 90:10) auf 80 Gew.-Teile eines teilchenförmigen Polybutadienkautschuks (mittlerer Teilchendurchmesser $d_{50}$ = 0,4 µm), erhalten durch Emulsionspolymerisation (Herstellung gemäß DE 3 534 088, Pfropfprodukt III 3).

C.II

Emulsions-Pfropfpolymerisat einer Monomermischung von 45 Gew.-Teilen Styrol/Acrylnitril (im Gew.-Verhältnis 72:28) auf 55 Gew.-Teile eines teilchenförmigen Polybutadienkautschuks (mittlerer Teilchendurchmesser $d_{50}$ = 0,4 µm), erhalten durch Emulsionspolymerisation (Herstellung gemäß DE 3 738 143, analog zu Pfropfpolymerisat B.II).

2. Herstellung und Prüfung der erfindungsgemäßen Formmassen

Die Komponenten A, B und C wurden auf einem 3,9 l Innenkneter bei Temperaturen zwischen 200 und 250 °C aufgeschmolzen und homogenisiert.

Von den Formmassen wurden auf einer Spritzgußmaschine Stäbe der Abmessung 80 x 10 x 4 mm³ (Verarbeitungstemperatur 260 °C) hergestellt, an denen die Kerbschlagzähigkeit bei Raumtemperatur und bei -20 °C (Methode ISO 180 1A) gemessen wurde.

An den Formmassen wurde eine Viskositätsfunktion (Scherviskosität $\eta$ [Pas] in Abhängigkeit von der Schergeschwindigkeit $\gamma$) im Bereich von ca. 100 bis 10 000 $s^{-1}$ bei 260 °C aufgenommen. In der Tabelle angegeben sind die Werte für $\gamma$ = 100 und 1000 $s^{-1}$.

Die bei 290 °C hergestellten Musterplättchen der Abmessung 60 x 40 x 2 mm³ wurden visuell beurteilt.

Die Zusammensetzung der Formmassen findet sich in Tabelle 1, die technologische Eigenschaften sind in Tabelle 2 aufgeführt.

Wie Tabelle 2 entnommen werden kann, läßt sich durch den Zusatz einer erfindungsgemäßen Menge an C.I (Bsp. 2) zu den Formmassen des Vergleichsbeispiels 1 die Zähigkeit deutlich verbessern.

Ein weiterer Zusatz an C.I über den erfindungsgemäßen Bereich hinaus (Vergleichsbeispiel 3) führt zu keiner weiteren Verbesserung der Zähigkeit mehr, wohl aber zu Beeinträchtigungen bei Fließverhalten und Oberflächenqualität (im Vergleich mit Bsp. 2).

Die erfindungsgemäßen Beispiele 5 bis 9 zeigen die deutliche Verbesserung des Zähigkeitsverhaltens bei Zusatz erfindungsgemäßer Mengen an C.I bzw. C.II zu den Formmassen des Vergleichsbeispiels 4.

Bei Fließverhalten, Oberflächenqualität und Rohton liegen die Formmassen der Beispiele 5 bis 9 auf vergleichbarem Niveau mit Vergleichsbeispiel 4.

**Tabelle 1** Zusammensetzung der Formmassen

| Beispiel | Komponenten Gew.-Teile A | B.I | B.II | C.I | C.II | Gesamtelastomergehalt aus A bis C (Gew.-Teile) | Elastomergehalt (Gew.-Teile) aus B (%) | C (%) |
|---|---|---|---|---|---|---|---|---|
| 1[1] | 60 | 40 | | | | 3,68 | 3,68 (100) | - |
| 2 | 60 | 37 | | 3 | | 5,80 | 3,40 (58,6) | 2,40 (41,4) |
| 3[1] | 60 | 30 | | 10 | | 10,76 | 2,76 (25,7) | 8,00 (74,3) |
| 4[1] | 60 | | 40 | | | 2,60 | 2,60 (100) | - |
| 5 | 60 | | 39 | 1 | | 3,34 | 2,54 (76,0) | 0,80 (24,0) |
| 6 | 60 | | 38 | 2 | | 4,07 | 2,47 (60,7) | 1,60 (39,3) |
| 7 | 60 | | 37 | 3 | | 4,81 | 2,41 (50,1) | 2,40 (49,9) |
| 8 | 60 | | 38 | | 2 | 3,57 | 2,47 (69,2) | 1,10 (30,8) |
| 9 | 60 | | 36 | | 4 | 4,54 | 2,34 (51,5) | 2,20 (48,5) |

1) Vergleichsbeispiele

Tabelle 2 Eigenschaften der Formmassen

| Beispiel | Kerbschlagzähigkeit [kJ/m²] R-T. | Kerbschlagzähigkeit [kJ/m²] $-20^0$ C | Scherviskosität [Pas] bei $\gamma$ 100 $s^{-1}$ | Scherviskosität [Pas] bei $\gamma$ 1000 $s^{-1}$ | Oberflächenqualität | Rohton |
|---|---|---|---|---|---|---|
| 1[1)] | 70 | 22 | 400 | 95 | ohne Befund | beige |
| 2 | 81 | 56 | 600 | 200 | kaum Schlieren | beige |
| 3[1)] | 59 | 57 | 725 | 225 | deutliche Schlieren | beige |
| 4[1)] | 67 | 19 | 470 | 155 | ohne Befund | hellbeige |
| 5 | 93 | 26 | 525 | 160 | ohne Befund | hellbeige |
| 6 | 90 | 42 | 540 | 155 | kaum Schlieren | hellbeige |
| 7 | 103 | 59 | 530 | 165 | kaum Schlieren | hellbeige |
| 8 | 83 | 34 | 550 | 160 | ohne Befund | hellbeige |
| 9 | 107 | 52 | 600 | 165 | ohne Befund | hellbeige |

1) Vergleichsbeispiele

## Patentansprüche

**1.** Thermoplastische Formmassen, enthaltend

A. 10 bis 95 Gew.-Teile eines oder mehrerer aromatischer Polycarbonate, und

B. 5 bis 90 Gew.-Teile eines oder mehrerer Pfropfpolymerisate, die erhalten werden durch Pfropfpolymerisation von

B.1 50 bis 99 Gew.-Teilen einer Mischung aus

B.1.1 50 bis 99 Gew.-Teilen Styrol, α-Methylstyrol, kernsubstituierten Styrolen, $C_1$-$C_8$-Alkylmethacrylaten, oder Mischungen daraus, und

B.1.2 50 bis 1 Gew.-Teilen Acrylnitril, Methacrylnitril, $C_1$-$C_8$-Alkylmethacrylaten, $C_1$-$C_8$-Alkylacrylaten, Maleinsäureanhydrid, N-Alkyl- oder N-Aryl-substituierten Maleinimiden oder Mischungen daraus,

in Gegenwart von

B.2 1 bis 50 Gew.-Teilen, eines mit B.1.1 und B.1.2 copolymerisierbaren Kautschuks mit einer Glasübergangstemperatur <10 °C, wobei das Pfropfpolymerisat B nach einem Masse- oder Lösungs- oder Masse-Suspensions-Polymerisationsverfahren hergestellt ist, und

C. 0,1 bis 50 Gew.-Teile eines Pfropfpolymerisats von

C.1 5 bis 60 Gew.-Teile einer Pfropfauflage aus Vinylmonomerpolymerisat, wobei die Pfropfauflage erhalten wurde durch Emulsions-Pfropfpolymerisation einer Monomermischung aus

C.1.1 50 bis 99 Gew.-Teilen Styrol, α-Methylstyrol, kernsubstituierten Styrolen, Methylmethacrylat oder Mischungen daraus, und

C.1.2 1 bis 50 Gew.-Teilen (Meth)acrylnitril, Methylmethacrylat, n-Butylacrylat, t-Butyl(meth)-acrylat, Maleinsäureanhydrid, N-Alkyl- oder N-Aryl-substituierten Maleinimiden oder Mischungen daraus,

auf

C.2 40 bis 95 Gew.-Teile einer vernetzten, teilchenförmigen elastomeren Pfropfgrundlage mit einem durchschnittlichen Teilchendurchmesser ($d_{50}$-Wert) von 0,05 bis 2 µm und einer Glasübergangstemperatur <10 °C,

wobei die Summe der Gew.-Teile aus A + B jeweils 100 Gew.-Teile beträgt und wobei sich die Gew.-Teile C auf 100 Gew.-Teile A + B beziehen, dadurch gekennzeichnet, daß der aus der Komponente C eingebrachte Anteil C.2 an der gesamten Elastomerkomponente (Summe aus B.2 und C.2) weniger als 50 Gew.-%, mindestens jedoch 10 Gew.-% ausmacht, und daß der Gesamtelastomergehalt (Summe der Gew.-Teile aus B.2 und C.2) der Formmassen aus A bis C weniger als 20 Gew.-Teile beträgt, bezogen auf 100 Gew.-Teile der Summe aus A bis C.

**2.** Formmassen gemäß Anspruch 1, dadurch gekennzeichnet daß sie 20 bis 90 Gew.-Teile der Komponente A, 10 bis 80 Gew.-Teile der Komponente B und 0,5 bis 30 Gew.-Teile der Komponente C enthalten.

**3.** Formmassen gemäß Anspruch 1, dadurch gekennzeichnet, daß sie 30 bis 80 Gew.-Teile der Komponente A, 20 bis 70 Gew.-Teile der Komponente B und 1 bis 15 Gew.-Teile der Komponente C enthalten.

**4.** Formmassen gemäß Ansprüchen 1 bis 3, dadurch gekennzeichnet, daß die Komponente B sich aus 65 bis 98 Gew.-Teilen B.1 und 2 bis 35 Gew.-Teilen B.2 und die Komponente C sich aus 10 bis 50 Gew.-Teilen C.1 und 50 bis 90 Gew.-Teilen C.2 zusammensetzt.

**5.** Formmassen gemäß Ansprüchen 1 bis 3, dadurch gekennzeichnet, daß die Komponente B sich aus 75 bis 97 Gew.-Teilen B.1 und 3 bis 25 Gew.-Teilen B.2 zusammensetzt.

**6.** Formmassen gemäß Ansprüchen 1 bis 5, dadurch gekennzeichnet, daß die Komponente B.1 aus 60 bis 95 Gew.-Teilen B.1.1 und 5 bis 40 Gew.-Teilen B.1.2 und daß die Komponente C.1 aus 60 bis 95 Gew.-Teilen C.1.1 und 5 bis 40 Gew.-Teilen C.1.2 besteht.

**7.** Formmassen gemäß Ansprüchen 1 bis 6, dadurch gekennzeichnet, daß der Gesamtelastomergehalt (Summe der Gew.-Teile aus B.2 und C.2) der Formmassen aus A bis C weniger als 10 Gew.-Teile beträgt, bezogen auf 100 Gew.-Teile der Summe aus A bis C.

**8.** Formmassen gemäß Ansprüchen 1 bis 7, dadurch gekennzeichnet, daß die Komponenten B.2 und C.2 eine Glasübergangstemperatur von < -10 °C besitzen, und daß der mittlere Teilchendurchmesser $d_{50}$ von B.2 0,8 bis 2,5 µm und $d_{50}$ von C.2 0,1 bis 0,6 µm beträgt.

**9.** Formmassen gemäß Ansprüchen 1 bis 8, dadurch gekennzeichnet, daß sie mindestens ein weiteres thermoplastisches Harz aus der Gruppe der aromatischen Polyestercarbonate, Polyalkylenterephthalate und Copolymerisate von Komponenten B.1.1 und B.1.2 enthalten.

**10.** Formmassen gemäß Ansprüchen 1 bis 9, dadurch gekennzeichnet, daß sie mindestens einen Zusatz aus der Gruppe der Stabilisatoren, Pigmente, Entformungsmittel, Fließhilfsmittel, Flammschutzmittel, Antistatika, Füll- und Verstärkungsstoffe enthalten.

**11.** Verfahren zur Herstellung der Formmassen der Ansprüche 1 bis 10, dadurch gekennzeichnet, daß man die Komponenten A, B und C sowie gegebenenfalls mindestens einen weiteren Bestandteil ausgewählt aus aromatischen Polyestercarbonaten, Polyalkylenterephthalaten, Copolymerisaten der Komponenten B.1.1 und B.1.2, Stabilisatoren, Pigmenten, Entformungsmitteln, Fließhilfsmitteln, Flammschutzmitteln, Antistatika, Füll- und Verstärkungsstoffen in bekannter Weise vermischt und bei erhöhten Temperaturen schmelzcompoundiert oder schmelzextrudiert.

**12.** Verwendung der Formmassen der Ansprüche 1 bis 10 zur Herstellung von Formkörpern.